# EUROPÄISCHE PATENTSCHRIFT

(11) **EP 2 535 299 B1**
(45) Veröffentlichungstag und Bekanntmachung des Hinweises auf die Patenterteilung: **27.11.2013**
(21) Anmeldenummer: 12178762.6
(22) Anmeldetag: 04.08.2011
(51) Int. Cl.: B65G 47/91

(54) **Sauggreifer für Lebensmittel**
Suction gripper for foodstuffs
Ventouse de préhension pour produits alimentaires

(30) Priorität: 04.08.2010 DE 102010038931
(43) Veröffentlichungstag der Anmeldung: 19.12.2012
(62) Teilanmeldung aus: 11176622.6
(73) Patentinhaber: Deutsches Institut für Lebensmitteltechnik e.V., 49610 Quakenbrück (DE)
(72) Erfinder: Hukelmann, Bernhard, 49610 Quakenbrück (DE); Franke, Knut Dr., 49610 Quakenbrück (DE); Heinz, Volker Dr., 49610 Quakenbrück (DE)
(74) Vertreter: Taruttis, Stefan Georg

(56) Entgegenhaltungen:
- DE-A1- 2 524 916
- DE-A1-102008 062 343
- GB-A- 748 138
- US-B1- 7 398 735

## Beschreibung

Die Erfindung betrifft einen Sauggreifer, auch Vakuumgreifer genannt, zum periodischen bzw. zyklischen Anheben von Gegenständen gegen eine Ansaugöffnung und Absetzen der Gegenstände von der Ansaugöffnung, sowie die Verwendung des Sauggreifers als Hebemittel, insbesondere für Lebensmittel, sowie ein Verfahren zum zyklischen Anheben bzw. Transportieren von Gegenständen, insbesondere von Lebensmitteln mittels des Sauggreifers. Der erfindungsgemäße Sauggreifer weist eine Ansaugöffnung auf, in der Unterdruck mit einem Antrieb erzeugt wird, der aus einer Druckluftquelle besteht, sodass der Sauggreifer ohne Unterdruckquelle und ohne elektrischen Antrieb für die Unterdruckerzeugung aufgebaut ist und arbeitet.

### Stand der Technik

Generell ist für den Transport von Gegenständen bekannt, Sauggreifer auf deren Oberfläche anzuordnen, die Unterdruck mittels einer angeschlossenen Unterdruckquelle oder mit eingebauter Unterdruckpumpe erzeugen.

Die EP 2149517 A2 beschreibt einen gattungsgemäßen Sauggreifer, der eine mit Druckluft betriebene Ejektordüse zur Erzeugung eines Unterdrucks an deren Saugseite aufweist und eine an der Saugseite angeschlossene Saugkammer, die eine von einem Gitter abgedeckte Saugöffnung aufspannt.

Bekannte Sauggreifer sind, wenn sie eine Unterdruckquelle oder eine Pumpe zur Erzeugung von Unterdruck aufweisen, für Verschmutzungen anfällig, da Anhaftungen oder lose Bestandteile des angesaugten Guts durch die Ansaugöffnung in die Unterdruckleitungen gelangen.

### Aufgabe der Erfindung

Die Erfindung stellt sich daher die Aufgabe, einen Sauggreifer bereitzustellen, dessen innere Oberflächen einschließlich der unter Unterdruck stehenden Bereiche leicht zu reinigen sind und der insbesondere keinen Anschluss für eine Unterdruckquelle erfordert.

### Allgemeine Beschreibung der Erfindung

Die Erfindung löst die Aufgabe mit den Merkmalen der Ansprüche und stellt insbesondere einen Sauggreifer bereit, dessen Antriebsmittel aus einer Druckluftquelle besteht, bzw. der eingerichtet ist, dass ein anschließbares Antriebsmittel aus einer Druckluftquelle bestehen kann. Der erfindungsgemäße Sauggreifer weist in einem Gehäuse einen Zentralkanal auf, der vorzugsweise entlang der Längsmittelachse des Gehäuses angeordnet ist. Der Zentralkanal weist eine erste Öffnung auf, die von einer konvexen Fläche um den Zentralkanal aufgespannt wird. Die konvexe Fläche erstreckt sich vorzugsweise rotationssymmetrisch um die Längsachse des Zentralkanals und weist besonders bevorzugt eine zum Radius der Längsmittelachse des Zentralkanals parabelförmige Krümmung auf, deren Steigung in Richtung auf die Längsmittelachse des Zentralkanals zunimmt, d.h. deren Steigung mit abnehmendem Radius größer wird, um eine zur Längsmittelachse zunehmende Krümmung zu bilden. Der Zentralkanal weist im Anschluss an die konvexe Fläche seinen kleinsten Querschnitt auf und weitet sich ab diesem kleinsten Querschnitt in Richtung auf seine zweite Öffnung auf, die der ersten Öffnung gegenüber liegt, vorzugsweise mit konisch zunehmendem Querschnitt.

Die erste Öffnung des Zentralkanals wird von einer ringförmigen Auslassöffnung eines Eintrittskanals begrenzt. Dabei ist die ringförmige Auslassöffnung durch eine von der konvexen Fläche beabstandete Schulter gebildet, sodass der Querschnitt der Auslassöffnung in einem an die erste Öffnung angrenzenden Abschnitt angeordnet ist, vorzugsweise um einen axialen Abschnitt der Längsachse des Zentralkanals beabstandet ist. Die Schulter ist vorzugsweise ringförmig, sodass sie mit der beabstandeten konvexen Fläche, die die erste Öffnung aufspannt, eine ringförmige Auslassöffnung um die Längsachse des Zentralkanals bildet.

Gegenüber der ersten Öffnung, und um die ringförmige Auslassöffnung beabstandet, weist der Sauggreifer einen Saugabschnitt auf, der eine Ansaugöffnung aufspannt, die vorzugsweise von starren oder flexiblen Dichtlippen gebildet wird.

Die Ansaugöffnung weist vorzugsweise einen offenen Querschnitt auf, wobei der Querschnitt des von dem Rohrabschnitt gebildeten Saugabschnitts von Stegen oder einem Gitter überspannt ist, die das Eindringen angesaugter Gegenstände, insbesondere von Lebensmittelbestandteilen vermindern. Vorzugsweise weist ein Gitter, das den Saugabschnitt, vorzugsweise in einem Abstand zur Ansaugöffnung, überspannt, Gitteröffnungen mit einem Querschnitt auf, der gleich oder kleiner ist als der Querschnitt des Zentralkanals an dessen Abschnitt kleinsten Querschnitts. In dieser Ausführung werden nur Bestandteile durch das Gitter angesaugt, die auch durch den Abschnitt kleinsten Querschnitts des Zentralkanals treten können, so dass Verstopfungen des Zentralkanals vermieden werden. Gitter oder Stege können in einem Abstand zur Ansaugöffnung innerhalb des Rohrabschnitts angeordnet sein, z.B. zu 10% bis 80% oder bis 50% der Entfernung zwischen Ansaugöffnung und erster Öffnung von der Ansaugöffnung beabstandet. In Ausführungsformen mit einem Gitter eignet sich der Sauggreifer insbesondere zur Verwendung als Portioniereinrichtung und Transporteinrichtung für Lebensmittel und für ein Verfahren zum Portionieren und Transportieren von Lebensmitteln, die kleiner als die Ansaugöffnung sind, z.B. für Gemüse wie Erbsen, Bohnen, Gemüsescheiben oder -stücke. Denn Lebensmittel, die kleiner als der Querschnitt der Ansaugöffnung sind, werden in genau einer Schicht gegen das Gitter gesaugt und werden bei Ansaugen aus einem Vorratsbehälter in jeweils derselben Menge von dem Sauggreifer angesaugt und können anschließend, z.B. bei Unterbrechung der Druckluftzufuhr oder Verschließen der zweiten Öffnung des Zentralrohrs, in dieser Menge abgegeben werden.

Der Sauggreifer erlaubt auch, einen zu haltenden bzw. zu transportierenden elastischen Gegenstand, insbesondere ein Lebensmittel, mittels erzeugten Unterdrucks gegen die starren Kanten des Rohrabschnitts, die die Ansaugöffnung aufspannen, zu bewegen, wobei der elastische Gegenstand teilweise in die Ansaugöffnung gezogen wird bzw. sich in die Ansaugöffnung beugt. Daher ist der Sauggreifer insbesondere zur Verwendung zum Halten oder Transportieren elastischer Gegenstände geeignet, da sich diese durch den erzeugten Unterdruck durch die Ebene der Ansaugöffnung anteilig in den Saugabschnitt bzw. in den Rohrabschnitt biegen und dadurch den Saugabschnitt zumindest anteilig abdichten, dass sie gegen die Kanten anliegen.

Für die Zwecke der Erfindung sind Gegenstände bevorzugt elastische Gegenstände, insbesondere Lebensmittel, wobei auch menschliche Körper oder vollständige Tierkörper oder deren Teile als elastische Gegenstände umfasst sind.

Stege oder Gitter, die die Ansaugöffnung bzw. den Saugabschnitt überspannen, können Durchlassöffnungen aufweisen, die kleiner als der zu transportierende Gegenstand sind, da der Sauggreifer generell eingerichtet ist, bei Druckluftzufuhr den Gegenstand gegen die Ansaugöffnung anzusaugen und bei Unterbrechung der Druckluftzufuhr den Gegenstand, z.B. unter Schwerkrafteinfluss, von der Ansaugöffnung abfallen zu lassen. Entsprechend weist der Sauggreifer vorzugsweise ein Ventil auf, das eingerichtet ist, periodisch für die Druckluftzufuhr zur ringförmigen Auslassöffnung zu öffnen, so dass dann ein Gegenstand an die Ansaugöffnung angesaugt wird, und entsprechend die Druckluftzufuhr zu unterbrechen, um den Gegenstand von der Ansaugöffnung fallen zu lassen.

Die zweite Öffnung des Zentralkanals ist mit einer Austrittsöffnung verbunden, aus der die durch die ringförmige Auslassöffnung einströmende Druckluft in Mischung mit durch die Ansaugöffnung angesaugter Luft und angesaugten festen und/oder flüssigen Bestandteilen austritt. Denn die die erste Öffnung aufspannende konvexe Fläche erzeugt bei Beaufschlagung der ringförmigen Auslassöffnung mit Druckluft einen Unterdruck, der in den Saugabschnitt wirkt, wobei die aus der ringförmigen Auslassöffnung austretende Druckluft entlang der konvexen Fläche in den Zentralkanal strömt und durch dessen gegenüberliegende zweite Öffnung austritt.

Optional kann die zweite Öffnung des Zentralkanals zumindest teilweise, insbesondere vollständig verschließbar sein, z.B. mittels eines Ventils, das an der zweiten Öffnung oder an dem an die zweite Öffnung anschließenden Austrittskanal angeordnet ist. Das Ventil kann unmittelbar an der zweiten Öffnung angeordnet sein oder an einer Leitung, die an der zweiten Öffnung des Zentralrohrs angeschlossen ist und den Austrittskanal bildet. Der Schritt des Verschließens der zweiten Öffnung führt in einem Verfahren mit dem Sauggreifer dazu, dass ein an der Ansaugöffnung angesaugter Gegenstand von dem Sauggreifer abgestoßen bzw. abgeblasen wird. Denn das Verschließen der zweiten Öffnung verhindert das Ausströmen der mit angesaugter Luft vermischten Druckluft durch den Zentralkanal und erzeugt einen Überdruck in dem Sauggreifer, der durch die Ansaugöffnung austritt.

Bevorzugt wird die Austrittsöffnung dadurch gebildet, dass die zweite Öffnung des Zentralkanals mit einem Austrittskanal verbunden ist, der in der Austrittsöffnung mündet. Die Austrittsöffnung weist vorzugsweise einen Querschnitt auf, der in Richtung auf die Ebene gerichtet ist, in der die Ansaugöffnung angeordnet ist, und vorzugsweise parallel zum Querschnitt der Saugöffnung liegt, sodass aus der Austrittsöffnung austretende feste oder flüssige Bestandteile in Richtung auf den an der Ansaugöffnung angeordneten Gegenstand austreten.

In einer Ausführungsform wird der Austrittskanal von einem Abschnitt des Gehäuses gebildet, der in einem Abstand um die Oberfläche der Leitung angeordnet ist, die dem Eintrittskanal gegenüber liegt. Auf diese Weise können Eintrittskanal und Austrittskanal koaxial zum Zentralkanal angeordnet sein und durch eine Leitung voneinander getrennt sein, die zwischen Gehäuse und Außenwandung des Zentralkanals angeordnet ist.

Bevorzugt wird der Austrittskanal von der Innenwand eines Gehäuses und dem Rohrabschnitt gebildet, der den Saugabschnitt bildet und eine Schulter aufweist, die mit der beabstandeten konvexen Fläche an der ersten Öffnung des Zentralkanals die ringförmige Auslassöffnung begrenzt. Das Gehäuse umfasst das Zentralrohr, das den Zentralkanal bildet, so dass die Oberfläche des Zentralrohrs, die gegenüber dem Zentralkanal liegt, mit der Innenwand des Gehäuses und einem Teil des Rohrabschnitts den Austrittskanal bildet. Vorzugsweise weist das Gehäuse einen Druckluftanschluss und den anschließenden Eintrittskanal auf, der Druckluft zur ringförmigen Auslassöffnung leitet. Der Eintrittskanal ist vorzugsweise in einem Abschnitt als Rohr oder Schlauch ausgebildet und weist einen um die ringförmige Auslassöffnung angeordneten Ringkanalabschnitt auf, der bevorzugt koaxial zur ringförmigen Auslassöffnung ist. Der Ringkanalabschnitt hat vorzugsweise einen rotationssymmetrisch um die ringförmige Auslassöffnung angeordneten konstanten Querschnitt. Der als Rohr oder Schlauch ausgebildete Abschnitt des Eintrittskanals kann außerhalb des Gehäuses angebracht sein, oder vorzugsweise innerhalb des Gehäuses verlaufen. Besonders bevorzugt verläuft der Eintrittskanal innerhalb zumindest einer Haltestange, die den Rohrabschnitt mit dem Gehäuse verbindet und z.B. an einem Gehäuseabschnitt befestigt ist, der gegenüber der Ansaugöffnung, z.B. am zweiten Ende, angeordnet ist. Bevorzugt ist der Gehäuseabschnitt gegenüber der Ansaugöffnung als Trägerplatte ausgebildet, die eine Befestigungseinrichtung zur Befestigung des Sauggreifers an einem Maschinen- oder Roboterarm aufweist und die optional den Druckluftanschluss trägt. Entsprechend weist bevorzugt das Gehäuse gegenüber der Ansaugöffnung eine Trägerplatte auf, die mittels zumindest eines Trägers mit dem Rohrabschnitt verbunden ist. In dieser Ausführungsform ist bevorzugt, dass das Gehäuse von der zweiten Öffnung des Zentralrohrs beabstandet ist, insbesondere dadurch, dass die Trägerplatte in einem Abstand von der zweiten Öffnung angeordnet ist, so dass das Volumen zwischen der Innenwand des Gehäuses und dem Zentralrohr den Austrittskanal bildet, so dass z.B. durch die Vergrößerung des Querschnitts vom Zentralkanal zum Austrittskanal eine Reduktion der Strömungsgeschwindigkeit und/oder eine Reduktion der Geräuschentwicklung an der Austrittsöffnung erreicht wird.

Weiter bevorzugt ist das Gehäuse gegenüber der zweiten Öffnung des Zentralrohrs, z.B. die Deckelplatte, nach innen konvex ausgebildet, z.B. kalottenförmig, mit parabelförmigem Querschnitt, oder kegelförmig, und bevorzugt zur Längsachse des Zentralrohrs symmetrisch, so dass das Gehäuse bzw. die Deckelplatte in Richtung auf das Zentralrohr ragen. Diese Ausführungsform ist durch die geringere Geräuschentwicklung beim Betrieb vorteilhaft, z.B. im Vergleich mit einem Gehäuse mit zylindrischem Innenquerschnitt.

Der Sauggreifer weist eine von einem Rohrabschnitt, der einen Saugabschnitt bildet, aufgespannte Ansaugöffnung auf, wobei in einem Abstand zur Ansaugöffnung eine um die ringförmige Auslassöffnung vom Saugabschnitt beabstandete konvexe Oberfläche angeordnet ist, die eine erste Öffnung eines in einem Zentralrohr gebildeten Zentralkanals aufspannt, wobei die konvexe Fläche in einem axialen Abschnitt mit dem kleinsten Querschnitt des Zentralkanals mündet, an welchen sich ein Abschnitt des Zentralkanals anschließt, der sich bis zu einer der ersten Öffnung gegenüberliegenden zweiten Öffnung aufweitet, und die ringförmige Auslassöffnung über einen Eintrittskanal mit einem Druckluftanschluss verbunden ist, wobei das Zentralrohr längs seiner Längsachse verschieblich in einer Ausnehmung des Rohrabschnitts geführt ist, bis eine erste Anlagefläche, die das Zentralrohr auf seiner Außenfläche gegenüber dem Zentralkanal aufweist, an einer dazu parallelen zweiten Anlagefläche des Rohrabschnitts anliegt.

Optional weist der Sauggreifer zur Verwendung als Hebevorrichtung für einen Gegenstand eine von einem Rohrabschnitt, der einen Saugabschnitt bildet, aufgespannte Ansaugöffnung auf, wobei in einem Abstand zur Ansaugöffnung eine um eine ringförmige Auslassöffnung vom Saugabschnitt beabstandete konvexe Oberfläche angeordnet ist, die eine erste Öffnung eines in einem Zentralrohr gebildeten Zentralkanals aufspannt, wobei die konvexe Fläche in einem axialen Abschnitt mit dem kleinsten Querschnitt des Zentralkanals mündet, an welchen sich ein Abschnitt des Zentralkanals anschließt, der sich bis zu einer der ersten Öffnung gegenüberliegenden zweiten Öffnung aufweitet, und die ringförmige Auslassöffnung über einen Eintrittskanal mit einem Druckluftanschluss verbunden ist, wobei das Zentralrohr längsverschieblich in einer Ausnehmung des Rohrabschnitts geführt ist, bis eine erste Anlagefläche, die das Zentralrohr auf seiner Außenfläche gegenüber dem Zentralkanal aufweist, an einer dazu parallelen zweiten Anlagefläche des Rohrabschnitts anliegt, wobei optional das Zentralrohr von einem Gehäuse umfasst ist.

Bevorzugt ist der Sauggreifer dadurch leicht zu reinigen und ist insbesondere zur Verwendung für die Reinigung in einer automatischen Spülmaschine geeignet, dass das Zentralrohr lösbar an einem von der ersten Öffnung beabstandeten Abschnitt des Rohrabschnitts angeordnet ist. In dieser Ausführungsform kann das Zentralrohr auf seiner gegenüber dem Zentralkanal angeordneten Oberfläche eine erste Anlagefläche aufweisen, die sich zumindest anteilig, vorzugsweise umfänglich geschlossen um das Zentralrohr erstreckt. Das Zentralrohr ist dadurch lösbar am Rohrabschnitt angeordnet, dass die erste Anlagefläche des Zentralrohrs gegen eine zweite Anlagefläche, die am Rohrabschnitt angeordnet ist, lösbar anstößt, optional mit der zweiten Anlagefläche verrastbar ist und insbesondere nur gegen die zweite Anlagefläche anliegt und durch die Schwerkraft und/oder die bei Zutritt von Druckluft erzeugte Kraft gegen die zweite Anlagefläche belastet ist. In dieser Ausführungsform kann das Zentralrohr durch Entrasten bzw. durch Bewegen ohne Lösen einer Verbindung von der zweiten Anlagefläche entfernt werden, so dass für eine Reinigung das Zentralrohr vom Rohrabschnitt und den an diesem angeordneten Elementen einfach getrennt werden kann.

Bevorzugt ist die zweite Anlagefläche zumindest abschnittsweise, bevorzugter vollständig parallel zur ersten Anlagefläche, um bei Anordnung gegeneinander eine hinreichende Dichtung zwischen dem Eintrittskanal und dem Zentralkanal zu bilden. Vorzugsweise ist die erste Anlagefläche in einem axialen Abschnitt zwischen der von der konvexen Fläche aufgespannten ersten Öffnung und der gegenüberliegenden zweiten Öffnung des Zentralrohrs angeordnet und die zweite Anlagefläche ist in dem Abstand zur Schulter des Rohrabschnitts angeordnet, der gleich dem Abstand der ersten Anlagefläche zur ersten Öffnung plus der axialen Erstreckung der ringförmigen Auslassöffnung ist. Weiter bevorzugt erstrecken sich erste und zweite Anlagefläche radial zur Längsmittelachse des Zentralrohrs.

Bevorzugt ist die zweite Anlagefläche an einem Stutzen des Rohrabschnitts angeordnet, der gegenüber der Ansaugöffnung liegt. Der Stutzen umfasst bevorzugt einen Anteil des Eintrittskanals und bildet mit der ringförmigen Schulter des Rohrabschnitts den Ringkanalabschnitt, der sich um die ringförmige Auslassöffnung erstreckt. Optional weist ein Stutzen Ausnehmungen in dem an ein Gehäuse angrenzenden Abschnitt auf. Das Gehäuse kann mit dem Stutzen verbunden sein, z.B. mittels Eingriffs von Stutzen und einem an die Austrittsöffnung angrenzenden Abschnitt des Gehäuses. Bevorzugt weist das Gehäuse eine Trägerplatte auf, die mittels zumindest eines Trägers, der sich vorzugsweise parallel zum Zentralrohr erstreckt, mit dem Stutzen verbunden. Besonders bevorzugt sind zumindest 2, bevorzugter 3 Träger zwischen Trägerplatte und Stutzen angeordnet, von denen zumindest ein Träger einen rohrförmigen Abschnitt des Eintrittskanals bildet. Optional kann der Sauggreifer genau einen Träger aufweisen, der zwischen Trägerplatte und Stutzen angeordnet ist und einen rohrförmigen Abschnitt des Eintrittskanals bildet.

Optional ist ein Stellglied am Zentralrohr angeordnet, mit dem das Zentralrohr gegenüber der Schulter des Rohrabschnitts bewegt werden kann, insbesondere parallel zur Längsachse des Zentralrohrs bewegt werden kann. Ein solches Stellglied kann das vollständige Zentralrohr gegenüber der ersten Öffnung bewegen, oder einen Abschnitt des Zentralrohrs gegenüber der ersten Öffnung bewegen, z.B. wenn das Stellglied zwei Abschnitte des Zentralrohrs gegeneinander bewegt. Der dem zweiten Ende zugewandte Abschnitt eines in zwei Abschnitte geteilten Zentralrohrs ist dabei vorzugsweise am Gehäuse fixiert. Mittels eines solchen Stellglieds kann der Abstand der ersten Öffnung bzw. der konvexen Fläche des Zentralrohrs zur Schulter des Rohrabschnitts eingestellt werden, so dass die ringförmige Auslassöffnung durch das Stellglied einstellbar ist, und damit die Stärke des Unterdrucks, der, insbesondere bei gleichem Druck der Druckluft, durch die in die ringförmige Auslassöffnung einströmende Druckluft erzeugt wird. Überdies dient ein solches Stellglied der Steuerung der Luftmenge, die durch den Zentralkanal strömt, so dass z.B. in der Ausführungsform mit einem Ventil, das die zweite Öffnung des Zentralkanal verschließt, die bei geschlossenem Zentralkanal aus der Ansaugöffnung tretende Luftmenge gesteuert wird. Ein solches Stellglied, das den Querschnitt bzw. die Größe der ringförmigen Auslassöffnung einstellt, kann z.B. zwischen der ersten und zweiten Anlagefläche angeordnet sein oder zwischen dem Zentralrohr und dem Gehäuse. Das Stellglied kann z.B. ein Piezoelement aufweisen und zwischen erster und zweiter Anlagefläche angeordnet sein. Alternativ kann das Stellglied zwei Abschnitte des Zentralrohrs längs der Mittelachse des Zentralrohrs gegeneinander bewegen, die z.B. gegeneinander veschieblich sind oder mittels eines Gewindes miteinander in Eingriff stehen.

Optional kann das Stellglied durch einen Drucksensor gesteuert sein, der im Saugabschnitt des Rohrabschnitts angeordnet ist, so dass sich im Verfahren eine Regelung des Unterdrucks an der Ansaugöffnung ergibt. Entsprechend weist der Sauggreifer in einer bevorzugten Ausführungsform einen im Saugabschnitt angeordneten Drucksensor auf, der das Stellglied steuert, z.B. um im Verfahren einen vorgegebenen Unterdruck an der Ansaugöffnung einzuregeln.

Optional steht das Zentralrohr mit dem Rohrabschnitt in Eingriff, wenn die die erste gegen die zweite Anlagefläche angeordnet ist, z.B. in Eingriff mittels Gewinde oder mittels Bajonettverschlusses. In dieser Ausführungsform kann das Stellglied eine Stellschraube und/oder einen Stellmotor aufweisen und zwischen Rohrabschnitt und Zentralrohr angeordnet sein, wobei das Zentralrohr mit einem Gewinde des Rohrabschnitts drehbar in Eingriff steht.

In dieser Ausführungsform kann das Zentralrohr optional ausschließlich durch Anordnung seiner ersten Anlagefläche gegen die am Rohrabschnitt angeordnete zweite Anlagefläche positionsgenau am Rohrabschnitt angeordnet sein, bevorzugt in Kombination mit der Führung des Zentralrohrs längs seiner Längsachse in dem Rohrabschnitt, um mit der ersten Öffnung die ringförmige Auslassöffnung zu bilden, da beim Betrieb die durch die ringförmige Auslassöffnung strömende Druckluft einen Unterdruck erzeugt, der die konvexe Fläche des Zentralrohrs gegen die Anlagefläche belastet. Wenn die erste Anlagefläche von einem z.B. ringförmigen Ansatz um das Zentralrohr gebildet wird, kann der innerhalb des Gehäuses erzeugte Überdruck den Ansatz des Zentralrohrs gegen die zweite Anlagefläche belasten und halten. Entsprechend kann der Sauggreifer dieser Ausführungsform ohne stoffschlüssige oder klemmende Verbindung bzw. Schraubverbindung zwischen dem Zentralrohr und dem Rohrabschnitt ausgebildet sein.

In einer Ausführungsform kann der Sauggreifer einen Rohrabschnitt mit einer vorzugsweise kreisförmigen Schulter und eine in einem Abstand zu der Schulter angeordnete zweite Anlagefläche und einen zwischen der Schulter und der zweiten Anlagefläche angeordneten Ringkanalabschnitt, der mit einem Eintrittskanal verbunden ist, sowie ein Zentralrohr mit einer ersten Öffnung, die von einer konvexen ringförmigen Fläche eingefasst ist, einer gegenüberliegenden zweiten Öffnung und einer ersten Anlagefläche, die parallel zur zweiten Anlagefläche ausgebildet ist, gegen die zweite Anlagefläche angeordnet ist und zwischen erster und zweiter Öffnung am Zentralrohr angeordnet ist, aufweisen oder daraus bestehen, wobei bevorzugt eine Austrittsöffnung dadurch gebildet ist, dass die zweite Öffnung des Zentralkanals mit dem Austrittskanal verbunden ist, der insbesondere von der Innenwand des Gehäuses und der Außenoberfläche des Zentralrohrs gebildet ist, wobei der Austrittskanal in eine Austrittsöffnung mündet, die in Richtung auf die Ebene angeordnet ist, in der die Ansaugöffnung aufgespannt ist.

Generell kann die Austrittsöffnung in Alternative zu der Öffnung zwischen Gehäuse und dem Rohrabschnitt, der die Ansaugöffnung bildet, von einem Ende einer Leitung gebildet sein, die an der zweiten Öffnung des Zentralrohrs angeschlossen ist. Diese alternative Ausführungsform erlaubt die Ableitung der Abluft, die aus der zweiten Öffnung des Zentralrohrs austritt, in eine größere Entfernung von dem Gehäuse. Diese Ausführungsform ist dahingehend vorteilhaft, dass die Geräuschentwicklung beim Betrieb am Gehäuse selbst geringer ist.

Vorzugsweise wird der Eintrittskanal, der in der ringförmigen Auslassöffnung mündet, von der Außenwandung des Zentralkanals und einer zu dieser beabstandeten Leitung, die vorzugsweise zylindrisch ist, gebildet. Der Eintrittskanal ist mit einer Zuleitung mit einem Druckluftanschluss verbunden, an den eine Druckluftquelle anschließbar ist.
Bei Verwendung des erfindungsgemäßen Sauggreifers in einem Verfahren zum Transport bzw. Anheben von Gegenständen, die insbesondere Lebensmittel sind, wird der Druckluftanschluss mit Druckluft beaufschlagt, die durch den Eintrittskanal strömt und durch die ringförmige Auslassöffnung etwa senkrecht zur Längsachse des Zentralkanals strömt. Auf diese Weise wird die konvexe Oberfläche, die sich radial um die Längsachse des Zentralkanals erstreckt, von radial zur Längsachse des Zentralkanals strömender Druckluft angeströmt. Im Zusammenwirken mit dem sich vergrößernden Durchmesser des Zentralkanals in dem Abschnitt, der sich an dessen Abschnitt mit geringstem Querschnitt angrenzend an die konvexe Fläche anschließt, wird ein Unterdruck erzeugt, der durch den Rohrabschnitt in die von diesem aufgespannte Ansaugöffnung wirkt. Die Ansaugöffnung kann von einer Dichtlippe eingefasst sein, die am Rohrabschnitt angebracht ist. Durch Anordnung eines Gegenstands über die Ansaugöffnung, bzw. an der Dichtlippe, wobei vorzugsweise der Gegenstand die Dichtlippe berührt und die Ansaugöffnung überdeckt, saugt der Sauggreifer den Gegenstand gegen die Dichtlippe. Bei Bewegung des Sauggreifers senkrecht zum Querschnitt der Ansaugöffnung, z.B. in Richtung gegen die Ansaugöffnung, wird der an der Dichtlippe angeordnete Gegenstand transportiert, insbesondere angehoben, wenn der Sauggreifer in einer Richtung gegen die Schwerkraft bewegt wird.
Ein Vorteil des erfindungsgemäßen Sauggreifers liegt darin, dass damit auch Gegenstände bewegt werden können, die die Ansaugöffnung nur teilweise überdecken, da allein der Unterdruck bzw. die Luftströmung in die Ansaugöffnung ein Anheben von Gegenständen bewirkt. Daher eignet sich der Sauggreifer insbesondere zur Verwendung als Hebevorrichtung bzw. in einem Verfahren zum schonenden Transport für empfindliche und/oder löchrige und/oder kleine Gegenstände, insbesondere Lebensmittel, die ohne Kontakt mit der Ansaugöffnung des Rohrabschnitt oder einer daran angeordneten Dichtlippe transportiert werden, insbesondere in der Ausführungsform, bei der ein Gitter mit Öffnungen kleiner als einer der Gegenstände den Saugabschnitt überspannt. Entsprechend liegt ein Vorteil des Sauggreifers darin, dass Gegenstände auch bei größeren Leckagen zwischen Ansaugöffnung und daran angeordnetem Gegenstand transportiert werden können. Daher eignet sich der Sauggreifer insbesondere zur Verwendung als Transport- oder Hebeeinrichtung bzw. in einem Verfahren zum Transport für druck- und/oder bruchempfindliche Lebensmittel, z.B. Fleisch, Fleisch- und Wurstwaren, Käse, jeweils insbesondere in Scheibenform, Backwaren, Kekse und Schokoladenerzeugnisse, insbesondere Pralinen, und kleine Lebensmittel und deren Stücke.

Die durch die ringförmige Auslassöffnung austretende Druckluft tritt in Mischung mit der Luft und festen bzw. flüssigen Bestandteilen, die durch die Ansaugöffnung eintreten, durch die erste Öffnung, durch den Zentralkanal und nach Durchströmen des Austrittskanal aus der Austrittsöffnung. Da der Zentralkanal in seinem Abschnitt, der an die konvexe Fläche gegenüber der ersten Öffnung angrenzt, seinen geringsten Querschnitt aufweist, können angesaugte Bestandteile, die durch diesen geringsten Querschnitt des Zentralkanals hindurchtreten, durch die Strömung längs des Zentralkanals durch dessen zweite Öffnung austreten, und anschließend durch den Austrittskanal und die Austrittsöffnung austreten, ohne von einer Unterdruckquelle angesaugt zu werden. Auf diese Weise werden durch die besondere Strömungsführung und die Abwesenheit einer Unterdruckquelle mögliche Verschmutzungen außerhalb des Sauggreifers vermieden. Bei Anordnung der Austrittsöffnung in Richtung auf die Ebene, in der die Ansaugöffnung angeordnet ist, können vom angesaugten Gegenstand gelöste feste oder flüssige Bestandteile wieder auf den angesaugten Gegenstand zurückübertragen werden. Alternativ kann die Austrittsöffnung eine Leitung oder einen Schlauch aufweisen, optional mit angeschlossenem Filter oder Zyklon zur Abscheidung von festen oder flüssigen Bestandteilen von austretender Luft.

Der Zentralkanal wird mit einem Zentralrohr gebildet, an dessen erstem Ende die erste Öffnung des Zentralkanals angeordnet ist, und dessen gegenüberliegendes zweites Ende die zweite Öffnung aufweist. Die dem Zentralkanal gegenüberliegende Außenwandung des Zentralrohrs bildet in der bevorzugten Ausführungsform gemeinsam mit einer das Zentralrohr umfassenden Leitung, die vorzugsweise zylindrisch ist, den Eintrittskanal für Druckluft.

In einer optionalen Ausführungsform besteht das Zentralrohr aus zumindest zwei Abschnitten, von denen ein erster Abschnitt den Bereich des Zentralkanals von dessen erster Öffnung bis zumindest in den geringsten Querschnitt des Kanals, bevorzugter bis in einen Bereich des sich konisch aufweitenden Zentralkanals umfasst und einem angrenzenden zweiten Abschnitt, der den Zentralkanal fortsetzt, beispielsweise dessen sich konisch aufweitenden Abschnitt, und die zweite Öffnung umfasst, oder in der zweiten Öffnung endet. Besonders bevorzugt sind der erste und der zweite Abschnitt des Zentralrohrs gegeneinander entlang der Längsachse des Zentralkanals verschieblich, beispielsweise indem sie mit mittels Gewindeeingriffs gegeneinander längs der Längsachse des Zentralkanals beweglich sind.

Vorzugsweise umfasst das Gehäuse das zumindest abschnittsweise koaxial in der zylindrischen Leitung angeordnete Zentralrohr mit Abstand, durch welchen der Austrittskanal zwischen der Leitung und dem Gehäuse gebildet wird.

Der Sauggreifer kann in jeder Ausführungsform zusätzlich an der Ansaugöffnung des Rohrabschnitts eine Haltevorrichtung aufweisen, die eine zur Halterung von Lebensmitteln angepaßte Form mit Durchbrechungen aufweist, wobei die Durchbrechungen den erzeugten Unterdruck bis in den von der Haltevorrichtung aufgespannten Eintrittsquerschnitt wirken lassen, und über den Eintrittsquerschnitt hinaus wirken und mit einem Lebensmittel den Bernoulli-Effekt erzeugen. Die Haltevorrichtung weist insbesondere eine Oberfläche mit Schalenform oder Trichterform mit Durchbrechungen auf, wobei die Trichterform innerhalb des Saugabschnitts, z.B. innerhalb des Rohrabschnitts, optional bis angrenzend an die Ansaugöffnung angeordnet ist. Bevorzugt hat die Schalen- oder Trichterform schlitzförmige Durchbrechungen. Die Schalen- oder Trichterform ist gegen die Ebene der Ansaugöffnung kegelförmig oder gewölbt konkav, wobei die Schalen- oder Trichterform bevorzugt gewölbt konvexe Oberflächen aufweist. Der Teil des Rohrabschnitts, in dem die Haltevorrichtung angeordnet ist, kann einstückig mit dem Rohrabschnitt ausgebildet sein, der sich über den Saugabschnitt erstreckt, oder ein trennbarer Teil des Rohrabschnitts sein, der z.B. mittels einer Klemm- oder Rasteinrichtung befestigt ist, insbesondere mittels zumindest einer auf der Außenfläche angeordneten Klammer und/oder Hakenverbindung, eines Gewindes und/oder eines Bajonettverschlusses.

Entsprechend betrifft die Erfindung auch ein Verfahren zum Halten durch Ansaugen von Lebensmitteln, die insbesondere zu füllen sind, z.B. zum Halten von Früchten, frisch oder eingelegt, mittels des Sauggreifers, der eine Haltevorrichtung aufweist. Optional weist das Verfahren den anschließenden Schritt des Füllens des in der Haltevorrichtung gehaltenen Lebensmittels auf, z.B. mit einem weiteren stückigen Lebensmittel oder einer pastösen Lebensmittelmasse. Optional kann das Verfahren vor dem Füllen den Schritt des Aushöhlens des in der Haltevorrichtung gehaltenen Lebensmittels aufweisen, z.B. das Aushöhlen von Tomaten. Es hat sich gezeigt, dass der Sauggreifer mit Haltevorrichtung besonders zum Halten von Lebensmitteln geeignet ist, die ihre ursprüngliche Hohlform, zumeist kegel-, schlauch-, kugel- oder birnenförmige Form verloren haben und zusammengedrückt sind, z.B. durch Einlegen in Lake oder Öl in höheren Schichten, insbesondere Südfrüchte, eingelegte Tomaten, Paprika, einschließlich Glocken- und Kirschpaprika, und Peperoni, da die Anordnung einer Frucht in der Haltevorrichtung mittels des erzeugten Unterdrucks zu einem schonenden Auffalten der Frucht führt, so dass eine Hohlform erzeugt wird, und vorzugsweise die natürliche Form annähernd wiederhergestellt wird. Das Halten und Auffalten erlaubt ein einfaches Füllen der Frucht. Das effektive und schonende Auffalten von Früchten wird darauf zurückgeführt, dass der durch die Durchbrechungen wirkende Unterdruck an der Außenfläche der Frucht einen Bernoulli-Effekt erzeugt.

### Genaue Beschreibung der Erfindung

Die Erfindung wird nun genauer mit Bezug auf die Figuren beschrieben, die schematisch
- in Figur 1 eine Ausführungsform des Sauggreifers im Schnitt zeigt,
- in Figur 2 eine bevorzugte Ausführungsform des Sauggreifers im Schnitt zeigt,
- in Figur 3 die Ausführungsform von Figur 2 mit der Schnittebene vor dem Zentralrohr zeigt,
- in Figur 4 eine Ausführungsform zeigt, die für das Auffalten von Früchten angepasst ist und
- in Figur 5 eine weitere Ausführungsform zeigt, die für das Auffalten von Früchten angepasst ist.

In den Figuren bezeichnen die Bezugsziffern funktionsgleiche Elemente. Die in den Figuren beschriebenen Einzelheiten sind erfindungsgemäß kombinierbar, auch wenn sie mit Bezug auf verschiedene Figuren beschrieben sind.

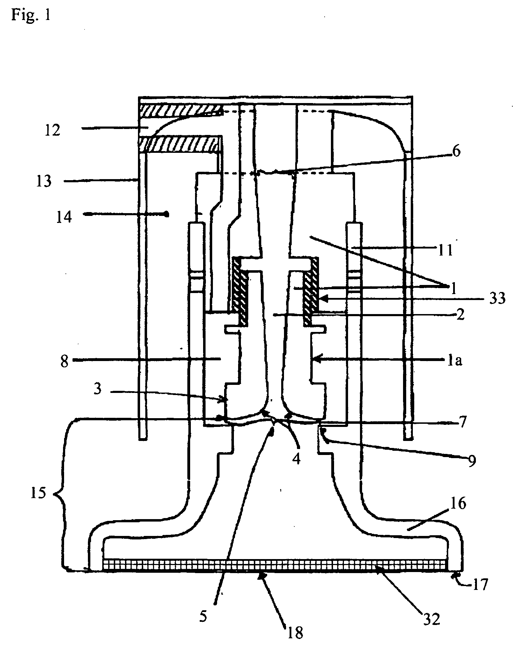

Wie in Figur 1 gezeigt ist, weist der Sauggreifer ein Zentralrohr 1 auf, in dem ein Zentralkanal 2 angeordnet ist, vorzugsweise koaxial zum Zentralrohr 1. Am ersten Ende 3 des Zentralkanals 2 spannt eine konvexe Fläche 4 des Zentralkanals 2 die erste Öffnung 5 des Zentralkanals 2 auf. Die konvexe Fläche 4 erstreckt sich vom kleinsten Querschnitt des Zentralkanals 2 bis in die Ebene, in der die erste Öffnung 5 aufgespannt ist. Vorzugsweise weist die konvexe Fläche 4 einen senkrecht zur Längsmittelachse des Zentralkanals 2 parabelförmigen Querschnitt auf, dessen Steigung von der Ebene, in der die erste Öffnung 5 angeordnet ist, zum Abschnitt des Zentralkanals 2 mit dessen geringstem Querschnitt zunimmt. Gegenüber der Ebene, in der die erste Öffnung 5 aufgespannt ist, erstreckt sich angrenzend an den Bereich des kleinsten Querschnitts des Zentralkanals 2 ein Abschnitt, dessen Querschnitt zur zweiten Öffnung 6 zunimmt, insbesondere sich konisch vom kleinsten Querschnitt des Zentralkanals 2 bis zur zweiten Öffnung 6 aufweitet. Die zweite Öffnung 6 bildet das zweite Ende 10 des Zentralrohrs gegenüber dessen erstem Ende 3. Angrenzend an die erste Öffnung 5 ist eine ringförmige Auslassöffnung 7 angeordnet, an die ein Eintrittskanal 8 für Druckluft angeschlossen ist. Vorzugsweise ist die ringförmige Auslassöffnung 7 etwa senkrecht zur Längsmittelachse des Zentralkanals 2 ausgerichtet, besonders bevorzugt senkrecht zur konvexen Fläche 4, um diese tangential mit austretender Druckluft anzuströmen.

Die ringförmige Auslassöffnung 7 wird von einem von der Zentralachse des Zentralkanals 2 beabstandeten Bereich der konvexen Fläche 4 und einer von dieser beabstandeten Schulter 9 gebildet, die z.B. an den Eintrittskanal 8 grenzt.

Der Eintrittskanal 8 wird von einem Bereich der Außenwandung 1a des Zentralrohrs 1 gebildet und zumindest abschnittsweise von einer Leitung 11, die besonders bevorzugt zylindrisch ist und koaxial zum Zentralkanal 2 angeordnet ist. Ein Druckluftanschluss 12, der am Gehäuse 13 angeordnet ist, ist mittels eines Druckluftkanals mit dem Eintrittskanal 8 verbunden.

An der zweiten Öffnung 6 des Zentralkanals 2 ist ein Austrittskanal 14 angeschlossen, der in einer Austrittsöffnung 19 mündet. Der Austrittskanal 14 wird entsprechend der bevorzugten Ausführungsform abschnittsweise von der Innenwandung des Gehäuses 13 und der Außenwandung der Leitung 11 gebildet. Der Austrittskanal 14 kann von der Innenwandung des Gehäuses 13 gebildet werden, das in einem Abstand um das Zentralrohr 1 angeordnet ist. Die Austrittsöffnung 19 ist entsprechend einer bevorzugten Ausführungsform auf die Ebene gerichtet, in der die Ansaugöffnung 18 aufgespannt ist.

Die Schulter 9 umfasst den Bereich, in dem die erste Öffnung 4 angeordnet ist, bzw. den Bereich des ersten Endes des Zentralrohrs 1, in dem bei Beaufschlagung des Sauggreifers mit Druckluft an Druckluftanschluss 12 Unterdruck erzeugt wird, der als Saugabschnitt 15 bezeichnet werden kann. Der Saugabschnitt 15 wird von einem Rohrabschnitt 16 gebildet, der gegenüber der Schulter 9 in einer Dichtlippe 17 mündet, die die Ansaugöffnung 18 aufspannt. Vorzugsweise ist die Ansaugöffnung 18 in einer Ebene aufgespannt, die etwa parallel zur Ebene der ersten Öffnung 5 liegt.

Der Rohrabschnitt 16 überspannt den Saugabschnitt 15 von der ringförmig um die ringförmige Auslassöffnung 7 angeordneten Schulter 9 bis zur Ebene, in der die Dichtlippe 17 angeordnet ist. Der Rohrabschnitt 16 kann sich entlang des Saugabschnitts 15 zur Ansaugöffnung 18 verjüngen oder aufweiten; vorzugsweise überspannt die Ansaugöffnung 18 einen Querschnitt, der gleich dem oder größer als der Querschnitt des Gehäuses 13 ist. Bevorzugt ist der den Saugabschnitt 15 überspannende Rohrabschnitt 16 einstückig mit der Leitung 11 und der Schulter 9 gebildet.

Weiter bevorzugt ist das Zentralrohr 10, bzw. dessen zweiter Abschnitt, mit der Innenoberfläche des Gehäuses 13 verbunden. Optional kann das Zentralrohr 1, bzw. dessen zweiter Abschnitt, einstückig mit dem Gehäuse 13 ausgebildet sein. Die Leitung 11 kann am Zentralrohr 1 oder an dessen zweiten Abschnitt fixiert sein, insbesondere in Ausführungsformen, in denen das Zentralrohr 1 von einem ersten und einem zweiten Abschnitt gebildet wird, und der erste Abschnitt entlang der Längsachse des Zentralkanals 2 zum zweiten Abschnitt des Zentralrohrs 1 verschieblich ist, beispielsweise mittels eines Gewindes, in dem erster und zweiter Abschnitt des Zentralrohrs 1 miteinander in Eingriff stehen. Ein solches Gewinde bildet ein Stellglied 33, mit dem der an die ringförmige Auslassöffnung 7 angrenzende Abschnitt des Zentralrohrs 1 gegen die Schulter 9 verschieblich ist.

Ein optionales Gitter 32, das bei Verwendung des Sauggreifers zum Portionieren von Lebensmitteln den Rohrabschnitt 16 überspannt, ist in Höhe der Ansaugöffnung 18 angeordnet. Bei Positionieren dieses Sauggreifers in einen Vorratsbehälter mit kleinen Lebensmitteln oder Lebensmittelstücken, die eine Größe im Bereich größer als die Öffnungen des Gitters 32 und kleiner als der Querschnitt der Ansaugöffnung 18 aufweisen, werden die Lebensmittel oder -stücke in genau einer Schicht gegen das Gitter 32 gesaugt, so dass eine präzise Portionierung allein durch die Fläche des Gitters 32 erfolgt.

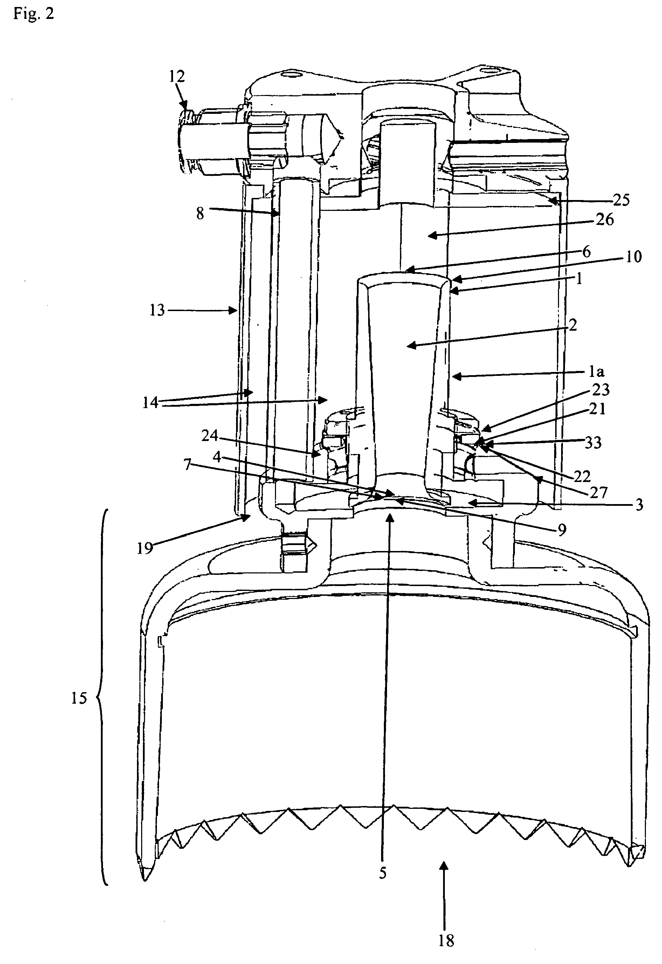

In der Ausführungsform von Figur 2 ist der Druckluftanschluss 12 an dem Ende des Gehäuses 13 angebracht, das gegenüber der Ansaugöffnung 18 liegt. Der Druckluftanschluss 12 ist mittels eines rohrförmigen Eintrittskanals 8 gebildet, der sich im Gehäuse 13 von dessen Ende gegenüber der Ansaugöffnung 18 zum Rohrabschnitt 16 erstreckt und weist innerhalb des Rohrabschnitts 16 einen Ringkanalabschnitt 20 auf, der sich um die ringförmige Auslassöffnung 7 erstreckt. Die ringförmige Auslassöffnung 7 wird durch die ringförmige Schulter 9 des Rohrabschnitts 16 und die beabstandete konvexe Fläche 4 der ersten Öffnung 5 des Zentralrohrs 1 gebildet. Das Zentralrohr 1 bildet auf seiner inneren Oberfläche den Zentralkanal 2, der sich von der ersten Öffnung 5 am ersten Ende 3 zur zweiten Öffnung 6 am gegenüberliegenden zweiten Ende 10 erstreckt und zwischen erstem Ende 3 und zweitem Ende 10 einen Abschnitt mit geringstem Querschnitt angrenzend an die konvexe Fläche 4 aufweist und sich zwischen diesem Abschnitt mit geringstem Querschnitt zum zweiten Ende vergrößert. Generell kann, wie auch hier dargestellt ist, der Rohrabschnitt 16 einen größeren Durchmesser als die ringförmige Schulter 9 bzw. als die ringförmige Auslassöffnung 7 aufweisen. Dabei ist bevorzugt, dass der Eintrittskanal 8 einen Ringkanalabschnitt 20 aufweist, der sich über einen Anteil des radialen Abschnitts, vorzugsweise über den gesamten radialen Abschnitt zwischen der ringförmigen Auslassöffnung 7 und dem an die ringförmige Auslassöffnung 7 angrenzenden Durchmesser des Rohrabschnitts 16 erstreckt.

Das Zentralrohr 1 weist auf seiner Außenfläche, die gegenüber dem Zentralkanal 2 liegt, eine erste Anlagefläche 21 auf. Die erste Anlagefläche 21 kann von einer Ausnehmung im Umfang des Zentralrohrs 1 gebildet sein, oder von einem das Zentralrohr 1 überragenden Ansatz 23. Die Ausnehmung bzw. ein das Zentralrohr 1 überragender Ansatz 23 sind vorzugsweise ringförmig und bilden eine ringförmige erste Anlagefläche 21. Die erste Anlagefläche 21 kann sich radial um die Längsachse des Zentralrohrs 1 in einer Ebene erstrecken oder ein Abschnitt einer Kegelfläche sein, die optional gewölbt ist. Die zweite Anlagefläche 22 ist parallel zur ersten Anlagefläche 21, so dass erste und zweite Anlagefläche 21, 22 aufeinanderliegen. Das Zentralrohr 1 ist von einem Abschnitt bzw. Stutzen 24 des Rohrabschnitts 16 umfasst bzw. längsverschieblich geführt, so dass das Zentralrohr 1 in diesen Abschnitt bzw. Stutzen 24 eingeschoben ist, bis seine erste Anlagefläche 21 gegen die zweite Anlagefläche 22 stößt. Optional ist ein Stellglied 33, z.B. ein Piezoelement, zwischen der ersten Anlagefläche 21 und der zweiten Anlagefläche 22 angeordnet. Durch Betätigen des Stellglieds wird das Zentralrohr 1 entlang seiner Längsachse gegenüber dem Rohrabschnitt 16 verschoben, so dass die Höhe der ringförmigen Auslassöffnung 7 zwischen der Schulter 9 und der konvexen Fläche 4 geändert wird. Wegen des großen Einflusses der Höhe der ringförmigen Auslassöffnung 7 auf den mittels der Druckluft erzeugten Unterdruck ist das Stellglied 33 generell zur Einstellung des erzeugten Unterdrucks während des Verfahrens zum Halten oder Transportieren geeignet. Überdies hat das Stellglied 33 zusätzlich zu der Wirkung als Regeleinrichtung für Unterdruck und Luftvolumen den Vorteil, mit der Schulter 9 und Bereich der konvexen Fläche 4 ein Verschlußventil für die Druckluft zu bilden.

Das Gehäuse 13 weist eine Trägerplatte 25 auf, die mittels zumindest eines rohrförmigen Abschnitts des Eintrittskanals 8 mit dem Rohrabschnitt 16 verbunden ist, bevorzugt mit zumindest zwei, bevorzugter mit drei Trägern 26, die sich zwischen Trägerplatte 25 und Rohrabschnitt 16 erstrecken, wobei zumindest ein Träger 26 einen Abschnitts des Eintrittskanals 8 bildet. Da die Trägerplatte 25 in einem Abstand vom zweiten Ende 10 des Zentralrohrs 1 angeordnet ist, bildet die Innenfläche des Gehäuses 13 mit der Außenfläche des Zentralrohrs 1 und den Trägern 26 den Austrittskanal 14, der sich bis zur Austrittsöffnung 19 erstreckt, die zwischen Gehäuse 13 und Rohrabschnitt 16 begrenzt ist.

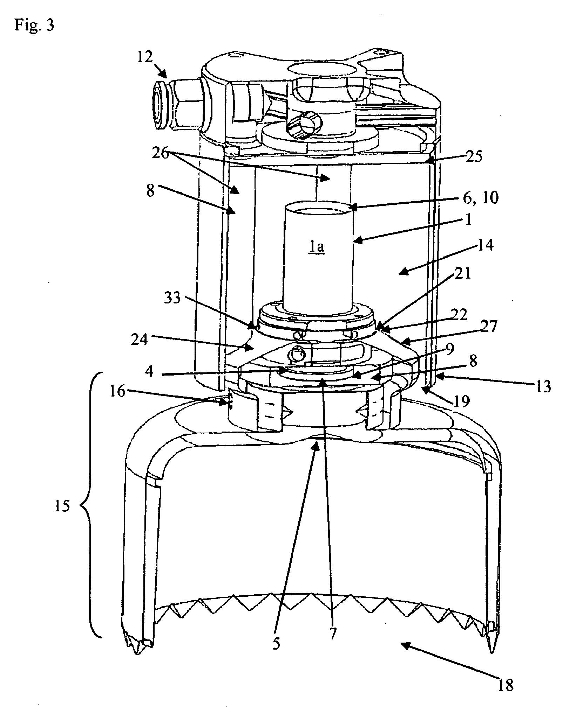

In Figur 3 ist der Schnitt vor dem Zentralrohr 1 gezogen, so dass die Außenfläche des Zentralrohrs 1 sichtbar ist. Wie dargestellt, ist generell bevorzugt, dass in Ausführungsformen, in denen der Austrittskanal 14 in eine in Richtung auf die Ebene der Ansaugöffnung gerichtete Austrittsöffnung 19 mündet, der Rohrabschnitt 16 einen Stutzen 24 mit einer Oberfläche 27 aufweist, die sich von der zweiten Anlagefläche 22 bis an die Austrittsöffnung 19 erstreckt, und insbesondere mit Neigung gegen die Längsachse des Zentralrohrs 1 verläuft.

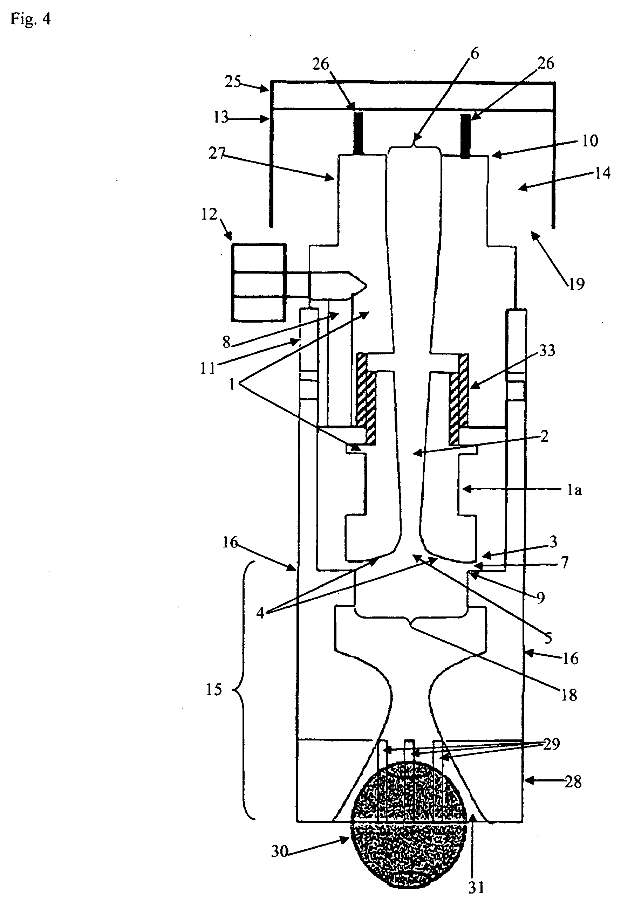

Die Figur 4 zeigt im Schnitt einen Sauggreifer mit einer Haltevorrichtung 28, die Durchbrechungen 29 in der schalen- oder trichterförmigen Oberfläche 31 aufweist, durch welche der im Saugabschnitt 15 anliegende Unterdruck auf eine Frucht 30 wirken kann. Die Durchbrechungen 29 sind, wie generell bevorzugt, radial zur Längsachse des Zentralrohrs 1 angeordnet sind.

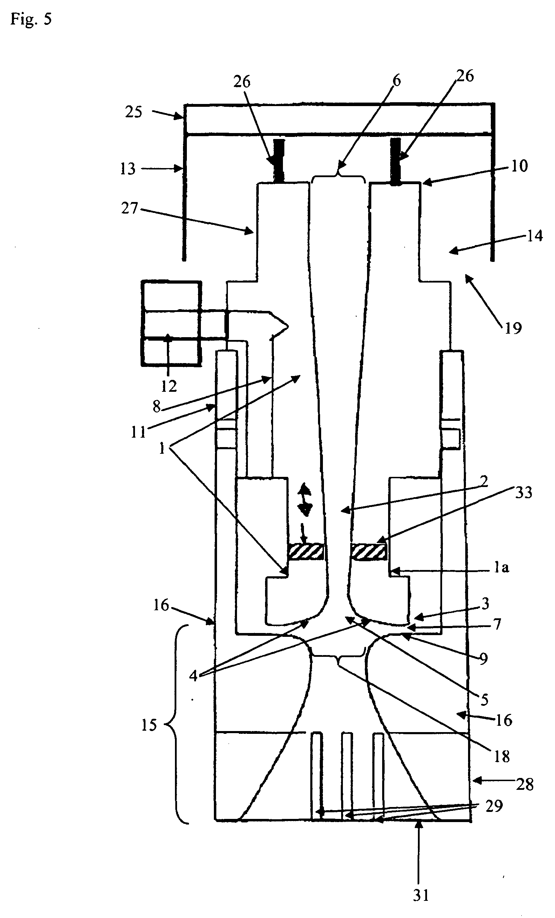

Figur 5 zeigt einen Sauggreifer mit Haltevorrichtung 28, bei dem das Zentralrohr 1 zwei gegeneinander längs der gemeinsamen Achse verschiebliche Abschnitte aufweist, die durch ein Stellglied 33 gesteuert gegeneinander beweglich sind.

### Bezugszeichenliste:

| | | | |
|---|---|---|---|
| 1 | Zentralrohr | 17 | Dichtlippe |
| 1a | Außenwand des Zentralrohrs 1 | 18 | Ansaugöffnung |
| 2 | Zentralkanal | 19 | Austrittsöffnung |
| 3 | erstes Ende des Zentralrohrs 1 | 20 | Ringkanalabschnitt |
| 4 | konvexe Fläche | 21 | erste Anlagefläche |
| 5 | erste Öffnung | 22 | zweite Anlagefläche |
| 6 | zweite Öffnung | 23 | Ansatz des Zentralrohrs |
| 7 | ringförmige Auslassöffnung | 24 | Stutzen |
| 8 | Eintrittskanal | 25 | Trägerplatte |
| 9 | Schulter | 26 | Träger |
| 10 | zweite Ende des Zentralrohrs 1 | 27 | Oberfläche des Stutzens |
| 11 | Leitung | 28 | Haltevorrichtung |
| 12 | Druckluftanschluss | 29 | Durchbrechung |
| 13 | Gehäuse | 30 | Frucht |
| 14 | Austrittskanal | 31 | Oberfläche der Haltevorrichtung 28 |
| 15 | Saugabschnitt | 32 | Gitter |
| 16 | Rohrabschnitt | 33 | Stellglied |

## Patentansprüche

1. Sauggreifer zur Verwendung als Hebevorrichtung für einen Gegenstand, wobei der Sauggreifer eine von einem Rohrabschnitt (16), der einen Saugabschnitt (15) bildet, aufgespannte Ansaugöffnung (18) aufweist, wobei in einem Abstand zur Ansaugöffnung (18) eine um eine ringförmige Auslassöffnung (7) vom Saugabschnitt (15) beabstandete konvexe Oberfläche (4) angeordnet ist, die eine erste Öffnung (5) eines in einem Zentralrohr (1) gebildeten Zentralkanals (2) aufspannt, wobei die konvexe Fläche (4) in einem axialen Abschnitt mit dem kleinsten Querschnitt des Zentralkanals (2) mündet, an welchen sich ein Abschnitt des Zentralkanals (2) anschließt, der sich bis zu einer der ersten Öffnung (5) gegenüberliegenden zweiten Öffnung (6) aufweitet, und
die ringförmige Auslassöfthung (7) über einen Eintrittskanal (8) mit einem Druckluftanschluss (12) verbunden ist, **dadurch gekennzeichnet, dass** das Zentralrohr (1) längs seiner Längsachse verschieblich in einer Ausnehmung des Rohrabschnitts (16) geführt ist, bis eine erste Anlagefläche (21), die das Zentralrohr (1) auf seiner Außenfläche gegenüber dem Zentralkanal (2) aufweist, an einer dazu parallelen zweiten Anlagefläche (22) des Rohrabschnitts (16) anliegt.

2. Sauggreifer nach Anspruch 1, **dadurch gekennzeichnet, dass** die ringförmige Auslassöffnung (7) von einem radial von der Längsachse des Zentralkanals (2) beabstandeten Abschnitt der konvexen Fläche (4) und einer axial von dieser beabstandeten Schulter (9) gebildet wird, die die konvexe Fläche (4) zumindest in einem ringförmigen Bereich überdeckt.

3. Sauggreifer nach Anspruch 1 oder 2, **dadurch gekennzeichnet, dass** das Zentralrohr (1) in einer Ausnehmung eines Stutzens (24) des Rohrabschnitts (16) geführt ist und die zweite Anlagefläche (22) die Ausnehmung des Stutzens (24) umfasst.

4. Sauggreifer nach einem der voranstehenden Ansprüche zur Verwendung als Portioniereinrichtung für ein Lebensmittel, **dadurch gekennzeichnet, dass** der Querschnitt des vom Rohrabschnitt (16) gebildeten Saugabschnitts (15) von einem Gitter überspannt ist, dessen Öffnungen kleiner sind als der Querschnitt des Lebensmittels.

5. Sauggreifer nach einem der voranstehenden Ansprüche , **dadurch gekennzeichnet, dass** die der ersten Öffnung (5) gegenüberliegende zweite Öffnung (6) des Zentralrohrs (1) mittels eines Ventils zumindest teilweise verschließbar ist, das an der zweiten Öffnung (6) oder an einer Leitung angeordnet ist, die an der zweiten Öffnung (6) des Zentralrohrs (1) angeschlossen ist und den Austrittskanal (14) bildet.

6. Sauggreifer nach einem der voranstehenden Ansprüche, **dadurch gekennzeichnet, dass** der Eintrittskanal (8) abschnittsweise von der Außenwandung (10) des Zentralrohrs (1) und einer koaxial angeordneten beabstandeten Leitung (11) gebildet wird.

7. Sauggreifer nach einem der voranstehenden Ansprüche, **dadurch gekennzeichnet, dass** am Zentralrohr (1) ein Stellglied (33) angeordnet ist, mit dem das Zentralrohr (1) zumindest abschnittsweise gegenüber der Schulter (9) des Rohrabschnitts (16) beweglich ist.

8. Sauggreifer nach Anspruch 7, **dadurch gekennzeichnet, dass** ein Drucksensor im Saugabschnitt angeordnet ist und das Stellglied (33) in Abhängigkeit vom Messsignal des Drucksensors steuerbar ist.

9. Sauggreifer nach einem der voranstehenden Ansprüche, **dadurch gekennzeichnet, dass** das Zentralrohr (1) mit dem Rohrabschnitt (16) mittels eines Bajonettverschlusses oder eines Gewindes verrastet ist.

10. Sauggreifer nach einem der voranstehenden Ansprüche, **dadurch gekennzeichnet, dass** die zweite Öffnung (6) des Zentralrohrs (1) mit einer Leitung verbunden ist, die das Gehäuse (13) überragt.

11. Sauggreifer nach einem der Ansprüche 1 bis 9, **dadurch gekennzeichnet, dass** ein Gehäuse (13) in einem Abstand zur zweiten Öffnung (6) angeordnet ist und einen Austrittskanal (14) umfasst, der in einer Austrittsöffnung (19) mündet, die durch den Rohrabschnitt (16) und das Gehäuse (13) begrenzt ist und auf die Ebene gerichtet ist, in der die Ansaugöffnung (18) liegt.

12. Sauggreifer nach Anspruch 11, **dadurch gekennzeichnet, dass** der Stutzen (24) eine kontinuierliche Oberfläche (27) aufweist, die sich von der zweiten Anlagefläche (22) zur Austrittsöffnung (19) erstreckt und gegen die Längsachse des Zentralrohrs (1) geneigt ist.

13. Sauggreifer nach einem der voranstehenden Ansprüche, **dadurch gekennzeichnet, dass** das Zentralrohr (1) von einem ersten Abschnitt und einem entlang der Längsachse des Zentralkanals (2) verschieblichen zweiten Abschnitt gebildet wird.

14. Sauggreifer nach einem der voranstehenden Ansprüche, **dadurch gekennzeichnet, dass** die konvexe Fläche (4) ein radial zur Längsmittelachse des Zentralkanals (2) parabelförmiges Profil aufweist, dessen Steigung mit abnehmendem Radius des Zentralkanals (2) zunimmt.

15. Sauggreifer nach einem der voranstehenden Ansprüche, **dadurch gekennzeichnet, dass** er ein Ventil aufweist, das eingerichtet ist, periodisch die Leitung (11) für die Druckluftzufuhr zur ringförmigen Auslassöffnung (7) zu öffnen.

16. Sauggreifer nach einem der voranstehenden Ansprüche, **dadurch gekennzeichnet, dass** vor der Ansaugöffnung (18) eine Haltevorrichtung (28) mit einer Oberfläche (31) mit Trichterform angebracht ist, die Durchbrechungen (29) aufweist, welche die Oberfläche (31) mit der Ansaugöffnung (18) verbinden.

17. Verfahren zum Transport oder Halten eines Gegenstands, insbesondere eines elastischen Gegenstands oder Lebensmittels, mit einem Sauggreifer nach einem der voranstehenden Ansprüche mittels Ansaugens, wobei ein Druckluftanschluss (12) eines Sauggreifers mit Druckluft beaufschlagt wird, die durch einen damit verbundenen Eintrittskanal (8) durch eine ringförmige Auslassöffnung (7) zumindest anteilig tangential gegen einen konvexe Fläche (4) strömt, die eine erste Öffnung (5) eines Zentralkanals (2) aufspannt, der sich zu einem Abschnitt mit geringstem Querschnitt verjüngt und in einem anschließenden Abschnitt bis zu einer der ersten Öffnung (5) gegenüberliegenden zweiten Öffnung (6) aufweitet, wobei ein Rohrabschnitt (16) die Ansaugöffnung (18) mit der ersten Öffnung (5) verbindet und der Gegenstand gegen die von einem Rohrabschnitt (16) aufgespannte Ansaugöffnung (18) angeordnet wird, **dadurch gekennzeichnet, dass** die Beaufschlagung mit Druckluft unterbrochen wird, das Zentralrohr (1) vom Rohrabschnitt (16) weg bewegt wird, Rohrabschnitt (16) und Zentralrohr (1) voneinander beabstandet gereinigt werden und anschließend das Zentralrohr (1) in einem Abstand zum Rohrabschnitt (16) angeordnet wird, bevor der Sauggreifer mit Druckluft beaufschlagt wird.

18. Verfahren nach Anspruch 17, **dadurch gekennzeichnet, dass** aus der zweiten Öffnung (6) des Zentralkanals (2) austretende Druckluft in Mischung mit durch die Ansaugöffnung (18) angesaugter Luft und angesaugten festen und flüssigen Bestandteilen durch eine Austrittsöffnung (15) austreten gelassen wird, die durch einen Austrittskanal (14) mit der zweiten Öffnung (6) verbunden ist und die zu der Ebene hin offen ist, in der die Ansaugöffnung (18) angeordnet ist.

19. Verfahren nach Anspruch 17 oder 18, **dadurch gekennzeichnet, dass** die Ansaugöffnung (18) des Rohrabschnitts (16) starr ist und der Gegenstand elastisch ist, zumindest anteilig an dem Rohrabschnitt anliegt und zumindest anteilig durch die Ebene der Ansaugöffnung (18) in den Saugabschnitt eingezogen wird.

## Claims

1. Suction gripper for use as a lifting device for an object, wherein the suction gripper has a suction opening (18) opened up by a pipe section (16) forming a suction section (15), wherein at a distance from the suction opening (18) a convex surface (4) is arranged spaced by an annular outlet opening (7) from the suction section (15), which convex surface (4) opens up a first opening (5) of a central channel (2) formed within a central well (1), wherein the convex surface (4) leads into an axial section having the smallest cross-section of the central channel (2) to which a section of the central channel (2) adjoins that broadens towards a second opening (6) opposite the first opening (5), and the annular outlet opening (7) is connected to a compressed-air connection (12) by an inlet duct (8), **characterized in that** the central well (1) is guided longitudinally displaceable in a recess of the pipe section (16) until a first abutment face (21) provided on the outer surface of the central well (1) opposite the central channel (2) lies against a second abutment face (22) parallel thereto of the pipe section (16), wherein the central well (I) is encompassed by a housing (13).

2. Suction gripper according to claim 1, **characterized in that** the annular outlet opening (7) is formed by a section of the convex surface (4) spaced radially from the longitudinal axis of the central channel (2) and by a shoulder (9) spaced axially thereto, which covers the convex surface (4) at least in an annular region.

3. Suction gripper according to claim 1 or 2 **characterized in that** the central well (1) is guided in a recess of a socket (24) of the pipe section (16), and the second abutment face (22) encompasses the recess of the socket (24).

4. Suction gripper according to one of the preceding claims for use as portioning device for a food, **characterized in that** the cross-section of the suction section (15) formed by the pipe section (16) is spanned by a grid, the openings of which are smaller than the cross-section of the food.

5. Suction gripper according to one of the preceding claims, **characterized in that** the second opening (6) of the central well (1) opposite the first opening (5) is at least partially sealable by means of a valve which is arranged at the second opening (6) or at a conduit which is connected to the second opening (6) of the central well (1) and forms the outlet duct (14).

6. Suction gripper according to one of the preceding claims, **characterized in that** the inlet duct (8) is sectionally formed by the outer wall (10) of the central well (1) and by a coaxially arranged spaced conduit (11).

7. Suction gripper according to one of the preceding claims, **characterized in that** at the central well (1) an actuator (33) is arranged by which the central well (1) is at least sectionally moveable in relation to the shoulder (9) of the pipe section (16).

8. Suction gripper according to claim 7, **characterized in that** a pressure sensor is arranged in the suction section and the actuator (33) is controllable in dependence from the measuring signal of the pressure sensor.

9. Suction gripper according to one of the preceding claims, **characterized in that** the central well (1) is locked to the pipe section (16) by means of a bayonet catch or by a thread.

10. Suction gripper according to one of the preceding claims, **characterized in that** the second opening (6) of the central well (1) is connected to a conduit which projects above the housing (13).

11. Suction gripper according to one of the claims 1 to 9, **characterized in that** a casing (13) is arranged at a distance to the second opening (6) and encompasses an outlet duct (14) leading into an outlet opening (19) which is delimited by the pipe section (16) and the housing (13) and is directed towards the plane in which the suction opening (18) lies.

12. Suction gripper according to claim 11, **characterized in that** the socket (24) has a continuous surface (27) which extends from the second abutment face (22) to the outlet opening (19) and is inclined against the longitudinal axis of the central well (1).

13. Suction gripper according to one of the preceding claims, **characterized in that** the central well (1) is formed by a first section and a second section which is movable along the longitudinal axis of the central channel (2).

14. Suction gripper according to one of the preceding claims, **characterized in that** the convex surface (4) has a parabolic profile radial to the longitudinal axis of the central channel (2), the incline of which increases with decreasing radius of the central channel (2).

15. Suction gripper according to one of the preceding claims, **characterized in that** it has a valve which is disposed to periodically open the conduit (11) for the compressed-air supply to the annular outlet opening (7).

16. Suction gripper according to one of the preceding claims, **characterized in that** in front of the suction opening (18) a holding device (28) having a surface (21) having a funnel shape is arranged, which surface has openings (29) connecting the surface (31) to the suction opening (18).

17. Process for transporting or for holding an object, especially an elastic object or food, by a suction gripper according to one of the preceding claims by means of sucking up, wherein a compressed-air connection (12) of a suction gripper is loaded with compressed air which flows through an annular outlet (7) via an inlet duct (8) connected thereto at least partially tangentially against a convex surface (4) opening up a first opening (5) of a central channel (2) which tapers towards a section having the smallest cross-section and which in an adjoining section broadens towards a second opening (6) opposite the first opening (5), wherein a pipe section (16) connects the suction opening (18) to the first opening (5) and the object is arranged against the suction opening (18) opened up by a pipe section (16), **characterized in that** the loading with compressed air is interrupted, the central well (1) is removed from the pipe section (16), the pipe section (16) and the central well (1) are cleaned while spaced from one another, and subsequently the central well (1) is arranged at a distance to the pipe section (16), prior to the suction gripper being loaded by compressed air.

18. Process according to claim 17, **characterized in that** compressed air exiting the second opening (6) of the central channel (2) in admixture with air sucked in through the suction opening (18) and sucked-up solid and liquid components exits through an outlet opening (15) which is connected to the second opening (6) by an outlet duct (14) and which is open in the direction to the plane in which the suction opening (18) is arranged.

19. Process according to claim 17 or 18, **characterized in that** the suction opening (18) of the pipe section (16) is rigid and the object is elastic, at least partially lies against the pipe section and at least partially is sucked in into the suction section through the plane of the suction opening (18).

## Revendications

1. Ventouse de préhension destinée à être utilisée comme dispositif de levage pour un objet, la ventouse de préhension présentant une ouverture d'aspiration (18) tendue par une section de tube (16) qui forme une section d'aspiration (15), dans lequel une surface convexe (4) espacée de la section d'aspiration (15) par d'une ouverture de sortie (7) de forme annulaire est disposée à distance de l'ouverture d'aspiration (18), qui ouvre une première ouverture (5) d'un canal central (2) formé dans un tube central (1), la surface convexe (4) débouchant dans une section axiale avec la plus petite section du canal central (2), auquel se raccorde une section du canal central (2), qui s'élargit jusqu'à une seconde ouverture (6) se trouvant en regard de la seconde ouverture (5), et l'ouverture de sortie (7) de forme annulaire est reliée par un canal d'entrée (8) avec un raccord d'air comprimé (12), **caractérisée par le fait que** le tube central (1) est guidé par coulissement longitudinal dans un évidement de la section de tube (16) jusqu'à ce qu'une première surface d'appui (21), qui présente le tube central (1) sur sa face extérieure par rapport au canal central (2), s'applique sur une seconde surface d'appui (22) de la section de tube (16) y étant parallèle, le tube central (1) étant entouré par un boîtier (13).

2. Ventouse de préhension selon la revendication 1, **caractérisée par le fait que** l'ouverture de sortie (7) de forme annulaire est formée par une section de la surface convexe (4) radialement espacée de l'axe longitudinal du canal central (2) et par un épaulement (9) axialement espacé de celle-ci, qui couvre la surface convexe (4) au moins dans une zone de forme annulaire.

3. Ventouse de préhension selon la revendication 1 ou 2, **caractérisée par le fait que** le tube central (1) est guidé dans un évidement d'une tubulure (24) de la section de tube (16) et la seconde surface d'appui (22) comprend l'évidement de la tubulure (24).

4. Ventouse de préhension selon l'une des revendications précédentes pour être utilisée comme dispositif de formation de portions pour des produits alimentaires, **caractérisée par le fait que** la section transversale de la section d'aspiration (15) formée par la section de tube (16) est enjambée par une grille dont les ouvertures sont plus petites que la section transversale du produit alimentaire.

5. Ventouse de préhension selon l'une des revendications précédentes, **caractérisée par le fait que** la seconde ouverture (6) en regard de la première ouverture (5) du tube central (1) est refermable au moins partiellement au moyen d'une valve, qui est disposée sur la seconde ouverture (6) ou sur une conduite, qui est raccordée avec la seconde ouverture (6) du tube central (1) et forme le canal de sortie (14).

6. Ventouse de préhension selon l'une des revendications précédentes, **caractérisée par le fait que** le canal d'entrée (8) est formé par sections par la paroi extérieure (10) du tube central (1) et d'une conduite (11) disposée coaxialement à distance.

7. Ventouse de préhension selon l'une des revendications précédentes, **caractérisée par le fait qu'**un actionneur (33) est disposé sur le tube central (1), avec lequel le tube central (1) est mobile au moins par section par rapport à l'épaulement (9) de la section de tube (16).

8. Ventouse de préhension selon la revendication 7, **caractérisée par le fait qu'**un capteur de pression est disposé dans la section d'aspiration et l'actionneur (33) peut être commandé en fonction du signal mesuré par le capteur de pression.

9. Ventouse de préhension selon l'une des revendications précédentes, **caractérisée par le fait que** le tube central (1) est encliqueté avec la section de tube (16) au moyen d'une fermeture à baïonnette ou d'un filetage.

10. Ventouse de préhension selon l'une des revendications précédentes, **caractérisée par le fait que** la seconde ouverture (6) du tube central (1) est reliée avec une conduite qui dépasse du boîtier (13).

11. Ventouse de préhension selon une des revendications 1 à 9, **caractérisée par le fait que** un boîtier (13) est disposé à distance de la seconde ouverture (6) et contient un canal de sortie (14), qui débouche dans une ouverture de sortie (19), qui est limitée par la section de tube (16) et le boîtier (13) et est orientée sur le plan dans lequel se trouve l'ouverture d'aspiration (18).

12. Ventouse de préhension selon la revendication 11, **caractérisée par le fait que** la tubulure (24) présente une surface (27) continue qui s'étend de la seconde surface d'appui (22) à l'ouverture de sortie (19) et est inclinée contre l'axe longitudinal du tube central (1).

13. Ventouse de préhension selon l'une des revendications précédentes, **caractérisée par le fait que** le tube central (1) est formé par une première section et une seconde section coulissante le long de l'axe longitudinal du canal central (2).

14. Ventouse de préhension selon l'une des revendications précédentes, **caractérisée par le fait que** la surface convexe (4) présente un profil de forme parabolique disposé radialement par rapport à l'axe central longitudinal du canal central (2) dont l'inclinaison augmente avec la diminution du rayon du canal central (2).

15. Ventouse de préhension selon l'une des revendications précédentes, **caractérisée par le fait qu'**elle présente une valve qui est réglée pour ouvrir de manière périodique la conduite (11) pour l'alimentation en air comprimé vers l'ouverture de sortie (7) de forme annulaire.

16. Ventouse de préhension selon l'une des revendications précédentes, **caractérisée par le fait qu'**un dispositif de support (28) avec une surface (31) en forme d'entonnoir est disposé devant l'ouverture d'aspiration (18), ledit dispositif présentant des passages traversants (29) qui relient la surface (31) avec l'ouverture d'aspiration (18).

17. Procédé de transport ou de maintien d'un objet, en particulier d'un objet élastique ou d'un produit alimentaire, avec une ventouse de préhension selon l'une des revendications précédentes au moyen d'une aspiration, dans lequel un raccord d'air comprimé (12) d'une ventouse de préhension est alimenté en air comprimé, qui circule par un canal d'alimentation relié (8) relié avec ce dernier par une ouverture de sortie (7) de forme annulaire au moins en partie tangentiellement contre une surface convexe (4), qui ouvre une première ouverture (5) d'un canal central (2), qui se rétrécie en une portion de très faible section et s'élargit dans une portion suivante jusqu'à une seconde ouverture (6) en regard de la première ouverture (5), dans lequel une section de tube (16) raccorde l'ouverture d'aspiration (18) avec la première ouverture (5) et l'objet est disposé contre l'ouverture d'aspiration (18) ouverte par une section de tube (16), **caractérisée par le fait que** l'alimentation en air comprimé est interrompue, le tube central (1) est éloigné de la section de tube (16), la section de tube (16) et le tube central (1) sont nettoyés, espacés l'un de l'autre, puis le tube central (1) est disposé à distance de la section de tube (16), avant que la ventouse de préhension soit alimentée en air comprimé.

18. Procédé selon la revendication 17, **caractérisé par le fait que** l'air comprimé sortant de la seconde ouverture (6) du canal central (2) mélangé avec l'air aspiré à travers l'ouverture d'aspiration (18) et des éléments solides et fluides aspirés s'échappe par une ouverture de sortie (15), qui est raccordée par un canal de sortie (14) avec la seconde ouverture (6) et est ouverte par rapport au plan dans lequel l'ouverture d'aspiration (18) est disposée.

19. Procédé selon la revendication 17 ou 18, **caractérisé par le fait que** l'ouverture d'aspiration (18) de la section de tube (16) est fixe et l'objet est élastique, s'applique au moins en partie sur la section de tube et est entrée au moins en partie à travers le plan de l'ouverture d'aspiration (18) dans la section d'aspiration.
